# EUROPÄISCHE PATENTANMELDUNG

(11) **EP 3 009 927 A1**
(43) Veröffentlichungstag der Anmeldung: **20.04.2016**
(21) Anmeldenummer: 15186590.4
(22) Anmeldetag: 24.09.2015
(51) Int. Cl.: G06F 3/12

(54) **VERFAHREN ZUR AUTOMATISIERTEN QUALIFIZIERUNG EINES WORKFLOWSYSTEMS ZUR FARBKONTROLLE**

(30) Priorität: 16.10.2014 DE 102014221051
(71) Anmelder: Heidelberger Druckmaschinen AG, 69115 Heidelberg (DE)
(72) Erfinder: Delang, Ulf, 69190 Walldorf (DE)

(57) **Zusammenfassung**

Verfahren zur automatisierten Qualifizierung eines Workflowsystems zur Verarbeitung eines Druckauftrages durch einen Rechner, welcher mittels einer Datenverbindung mit dem Rechner des Workflowsystems verbunden ist, die folgenden Schritte umfassend:
• Anlegen und Durchlaufen eines Druckauftrages im Workflowsystem unter Verwendung einer definierten digitalen Testform
• Speichern der Ausgabedaten des Workflowsystems, insbesondere von ppf- und jdf-Dateien
• Überprüfung der Ausgabedaten hinsichtlich der Bildinhalte
• Überprüfung der Ausgabedaten hinsichtlich der Bildgeometrie und Bildqualität
• Anfertigen eines Testprotokolls mit Bewertung der einzelnen geprüften Parameter sowie der Gesamtperformance des getesteten Workflowsystems

## Beschreibung

Die vorliegende Erfindung betrifft ein Verfahren zur automatisierten Qualifizierung eines Workflowsystems zur Farbkontrolle.

Die Erfindung liegt in dem technischen Gebiet der Testautomatisierung.

Die Abarbeitung von Druckaufträgen wird in der heutigen Druckindustrie teilautomatisiert und rechnergestützt durchgeführt. Dabei existieren von Anbieter zu Anbieter verschiedene Softwaresysteme, sogenannte Workflowsysteme, welche die Kundendaten eines Druckauftrages verarbeiten und in einen von modernen Druckmaschinen verwertbares Format transformieren. Für diese Ausgangsdaten existieren verschiedenste Formate. Die Bekanntesten sind jdf (Job Definition File) und ppf (Print Production Format). Die Workflowsysteme beschäftigen sich mit dem Stadium des Druckauftrages der auch Druckvorstufe oder Prepress genannt wird. Dabei werden Texte, Bilder und sonstige Grafiken zu Druckvorlagen zusammengefasst. Die notwendigen Layoutaufgaben werden durch die Workflowsysteme realisiert. Diese arbeiten, je nach Grad der Entwicklung, mehr oder weniger stark automatisiert und ermöglichen damit dem menschlichen Anwender eine deutlich vereinfachte Abarbeitung der Druckaufträge.

Die Arbeitsweise, insbesondere hinsichtlich Qualität, der Workflowsysteme lässt sich auf mehrere Arten überprüfen. Am weitesten verbreitet ist die Bewertung durch einen erfahrenen Druckvorstufentechniker. Da diese durch die zunehmende Digitalisierung der Druckvorstufe immer weniger zur Verfügung stehen, rückt eine automatisierte Bewertung näher in den Fokus.

So ist z.B. aus der US Patentanmeldung US 2013 0050720 A1 ein Verfahren und ein System zur Bewahrung von Bildqualität bekannt. Es wird dabei zunächst eine Vielzahl von Schwellwert-Standards für die Bildqualität etabliert. Wird ein Druckauftrag gestartet wird diesem aus der Menge von Standards ein passender Standard zugeordnet. Die Ergebnisse des Druckauftrages werden gemessen und mit dem zugewiesenen Standard-Schwellwert abgeglichen. Liegt der gemessene Wert unter dem zu erfüllenden Schwellwert, so wird geprüft, ob der irgendein anderer Standard-Schwellwert aus dem Pool erfüllt werden kann. Ist auch dies nicht der Fall, wird der Druckauftrag zu Ende geführt, aber vom Qualitätssicherungssystem für den Anwender als nicht ausreichend (rot) gekennzeichnet. Erfüllt er irgendeinen Standard-Schwellwert wird er als qualitativ kritisch (gelb), erfüllt er den vorgesehenen Standard als in Ordnung (grün) gekennzeichnet.

Dieses Verfahren bezieht sich jedoch nur auf die resultierende Bildqualität der Druckaufträge. Andere wichtige Qualitätskriterien, aus denen die Funktion des Workflowsystems qualitativ beurteilt werden könnte, wie z.B. die Bildinhalte, aber auch die Bildgeometrie werden nicht erfasst. Zudem erfolgt keine Beurteilung des Workflowsystems selber, sondern nur eine Überprüfung und Beurteilung der resultierenden Bildqualität eines Druckauftrages. Auch wird hier das reale Druckprodukt überprüft, was zur reinen Überprüfung des Workflowsystems nicht notwendig ist. Dazu würde es genügen die noch rein digitalen Ausgabedaten des Workflowsystems zu überprüfen. Mögliche Fehler und Abweichungen können sonst sowohl durch eine falsche Bearbeitung durch das Workflowsystem, als auch durch Fehler in der Druckmaschine selbst entstehen. Eine Unterscheidung zwischen beiden Fehlerursachen ist dann nicht mehr möglich.

Die Aufgabe der vorliegenden Erfindung ist es daher, ein Verfahren zur automatisierten Qualitätsüberprüfung eines Workflowsystems zu offenbaren, in welchem die Funktionsweise des Workflowsystems auf die Abarbeitung eines Druckauftrages getestet wird.

Die erfindungsgemäße Lösung dieser Aufgabe stellt ein Verfahren zur automatisierten Qualifizierung eines Workflowsystems zur Verarbeitung eines Druckauftrages durch einen Rechner dar, wobei dieser mittels einer Datenverbindung mit dem Rechner des Workflowsystems verbunden ist und das Verfahren die folgenden Schritte umfasst:
- Anlegen und Durchlaufen eines Druckauftrages im Workflowsystem unter Verwendung einer definierten digitalen Testform
- Speichern der Ausgabedaten des Workflowsystems, insbesondere von ppf- und jdf-Dateien,
- Überprüfung der Ausgabedaten hinsichtlich der Bildinhalte
- Überprüfung der Ausgabedaten hinsichtlich der Bildgeometrie und Bildqualität
- Anfertigen eines Testprotokolls mit Bewertung der einzelnen geprüften Parameter sowie der Gesamtperformance des getesteten Workflowsystems

Entscheidender Punkt der Erfindung ist dabei die automatisierte Auswertung der Ausgabedaten des Workflowsystem. Denn das Workflowsystem verarbeitet die Daten des Druckauftrages in der Druckvorstufe zu einem Job Definition File (jdf) oder ähnlichen Dateien (PPF, pdf, etc), in welchem die genauen Details des Druckauftrages, hinsichtlich Anordnung von Text und Bildern, Auflösung der Bilder etc, festgehalten werden und welches dann zur Ausführung des Druckauftrages an die Druckmaschine gesendet wird. Kern des offenbarten Verfahrens ist es, diese Datei, bzw. dessen Inhalt auf bestimmte Parameter zu testen, um damit die Qualität des Workflowsystems zu bewerten.

Vorteilhafte und daher bevorzugte Weiterbildungen des Verfahrens ergeben sich aus den zugehörigen Unteransprüchen sowie aus der Beschreibung mit den zugehörigen Zeichnungen.

Eine bevorzugte Weiterbildung ist dabei, dass die digitale Testform zu testende Bildinhalte, wie kleine Strukturen, homogene Flächen, CMYK-Bilder, einen Nutzen, definierte Kombinationen von Skalen- und Sonderfarben, sowie definierte Messelemente enthält.
Die Testform enthält definierte Eingangsdaten aus denen das Workflowsystem dann den Druckauftrag in Form eines jdf erstellt. Um die Qualität des Systems zu testen, sollten diese Eingangsdaten einen möglichst großen Bereich an potentiellen Druckaufträgen abdecken. Z.B. Bilder, Text, möglichst verschiedene Farben, sowie Strukturen etc. Um dies definiert zu testen, enthält die digitale Testform Bildinhalte in Form von kleinen Strukturen, homogenen Flächen, CMYK-Bilder, Nutzen, definierte Kombinationen von Skalen- und Sonderfarben, sowie definierte Messelemente.

Eine weitere bevorzugte Weiterbildung ist dabei, dass die zu überprüfenden Bildinhalte der Ausgabedaten insbesondere die Auflösung des Bildes, die Qualität der Homogenität und die Plausibilität der Bildinhalte umfassen.
Die vom Workflowsystem erstellten Ausgabedaten in Form des jdf, werden von einem Rechner mittels eines Datenverarbeitungsprogramms zur Qualitätsanalyse auf ihren Inhalt geprüft. Ausgehend von den bekannten definierten Eingangsdaten der Testform, wird getestet, ob das jdf sämtliche zu erwartenden Daten in der entsprechenden Qualität enthält. Dies umfasst insbesondere die Auflösung des Bildes, die Qualität der Homogenität und die Plausibilität der Bildinhalte.

Eine bevorzugte Weiterbildung ist dabei, dass die zu überprüfende Bildgeometrie und Bildqualität der Ausgabedaten, insbesondere die Größe des Sujets, die Position des Sujets auf dem Bedruckstoff, die Farbdaten und Separationen, sowie Typ und Größe des Bedruckstoffes, umfassen.
Weitere Kriterien auf die das jdf zu prüfen sind, umfassen die zu überprüfende Bildgeometrie und Bildqualität der Ausgabedaten, insbesondere die Größe des Sujets, die Position des Sujets auf dem Bedruckstoff, die Farbdaten und Separationen, sowie Typ und Größe des Bedruckstoffes.

Eine weitere bevorzugte Weiterbildung ist dabei, dass die Bewertung der Gesamtperformance des zu testenden Workflowsystems in Form einer Ampelbewertung geschieht.
Aufbauend auf den genannten Prüfkriterien, bewertet der Steuerungsrechner, bzw. das auf ihm aktive Qualitätsanalyseprogramm, die Abweichungen der Daten des jdf von den zu erwartenden Parametern. Je nach Einstellung der Toleranzen, ergibt sich ein Gesamturteil über die Qualität des vom Workflowsystems erstellten jdfs und damit auch direkt von der Qualität des Workflowsystems. Diese wird in Form einer Ampeldarstellung vom Rechner ausgegeben.

Eine bevorzugte Weiterbildung ist dabei, dass zur Einordnung der Testergebnisse das resultierende Testprotokoll mit einem vorgefertigten Testprotokoll mit idealen Sollwerten abgeglichen wird.
Das Qualitätsanalyseprogramm erstellt zudem ein Testprotokoll, wo die einzelnen Ergebnisse, insbesondere die Abweichungen einzelner Parameter von den Sollwerten, sowie die Gesamtbeurteilung des Workflowsystems zusammengefasst werden. Um dem Nutzer eine bessere Einschätzung der Testergebnisse zu ermöglichen, kann vom Programm auch ein Testprotokoll mit idealen Ergebnissen generiert werden. Auch ein reales Testprotokoll eines anderen Workflowsystems, bereitgestellt über eine Netzwerkverbindung, bietet sich als Vergleich an.

Das Verfahren sowie funktionell vorteilhafte Weiterbildungen des Verfahrens werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen. Die Zeichnungen zeigen:
- Figur 1: den Einsatzfall für das Verfahren,
- Figur 2: den Ablauf des Verfahrens

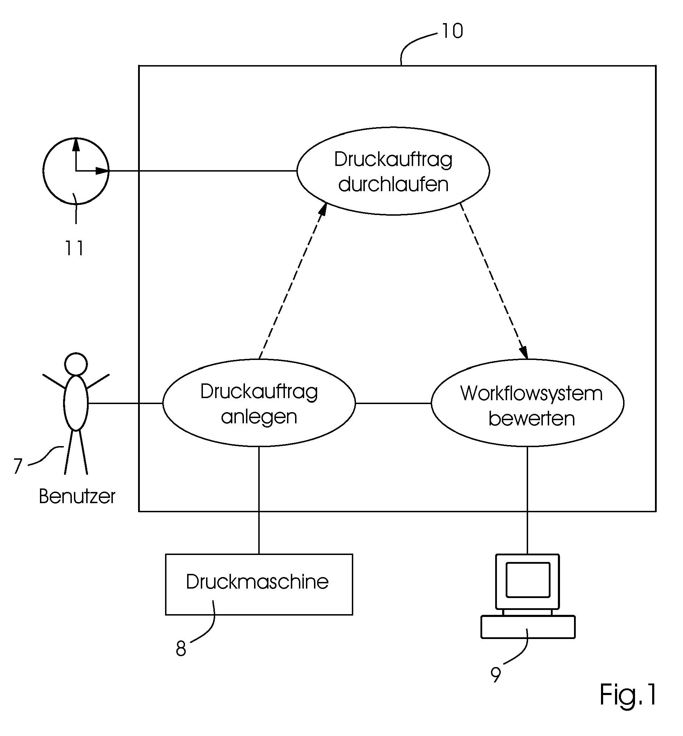

Figur 1 zeigt dabei die Einsatzumgebung des offenbarten Verfahrens an. Ein Anwender 7 legt einen Druckauftrag 2 an, das Workflowsystem 10 bearbeitet diesen, indem es die Informationen auswertet und anhand von Informationen über die zur Verfügung stehenden Druckmaschinen 8 ein jdf (Job Definition File) 3, erstellt. Dieses wird von Rechner 9 mit einem Analyseprogramm ausgewertet und damit die Qualität des Workflowsystems 10 geprüft. Der Rechner 9 muss dabei nicht extern angeordnet sein. Das Programm kann auch auf dem Steuerungsrechner 9 des Workflowsystems 10 und/oder der Druckmaschine 8 aktiv sein.

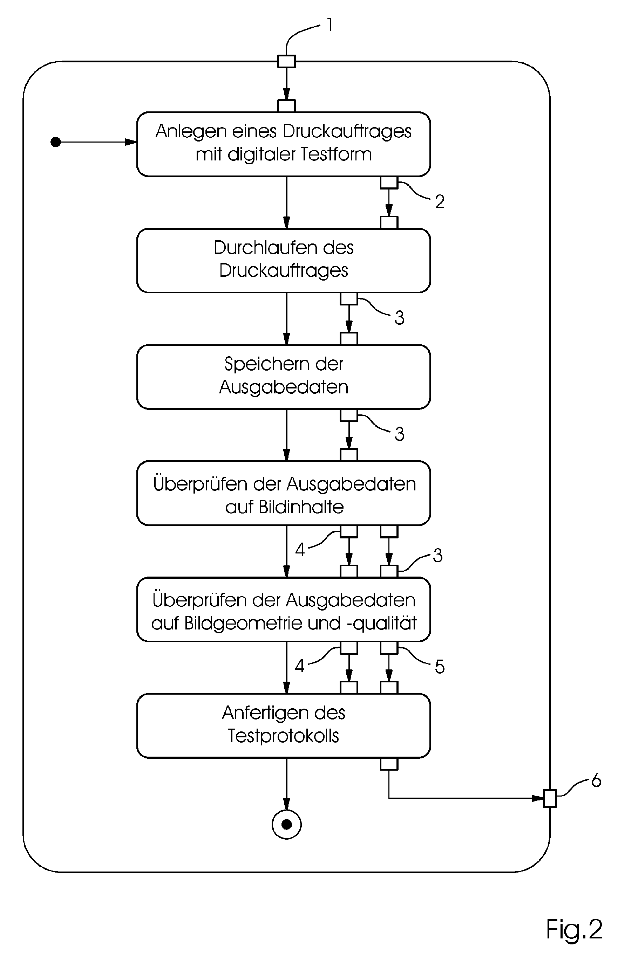

In Figur 2 dagegen wird der Ablauf des Verfahrens in einer bevorzugten Ausführungsvariante dargestellt. Der erste Schritt besteht im Anlegen und Durchlaufen eines Auftrages 2 im Workflowsystem 10 unter Verwendung einer definierten digitalen Testform 1, die geeignet ist, die Workflowstrecke auf die notwendigen Parameter und Bildinhalte 12 zu prüfen. Darunter fallen im Besonderen folgende zu testende Bildinhalte: Kleine Strukturen, homogene Flächen, CMYK Bilder, Nutzen, definierte Kombinationen von Skalen-und Sonderfarben, Definierte Messelemente wie Farbmessstreifen und Minispots. Das Workflowsystem verarbeitet diese Daten und erzeugt ein jdf 3, welches die Ausgabedaten 3 des Druckauftrages 2 in einer für die Druckmaschine 8 verwertbaren Form beinhaltet. Auch andere Formate für die Ausgabedaten 3, wie z.B. ppf, sind möglich, solange die Druckmaschine 8 diese verwerten kann. Das jdf 3 wird dann gespeichert und an einen Rechner 9 übertragen. Die Datenübertragung kann sowohl direkt über ein Netzwerk als auch mittels eines sonstigen Datenträgers (z.B. USB-Stick) geschehen. Auf dem Rechner 9 werden die Ausgabedaten 3 von einem Qualitätsanalyseprogramm ausgewertet. Prüfungsparameter 12 sind dabei vor allem die Bildinhalte 4 des Druckauftrages. Entscheidend sind Kriterien wie die Auflösung, die Qualität der Homogenität, die Plausibilität und weitere Parameter. Weitere Prüfparameter 12 sind die Bildgeometrie und die Bildqualität 5, welche sich vor allem aus der Größe des Sujets, der Position des Sujets auf dem Bedruckstoff, der Farbdaten und Separationen (Sollwerte, Druckwerk-Farzuordnung, Stanz- und Lackseparationen) und dem Typ und der Größe des Bedruckstoffes zusammensetzen.
Zur Verarbeitung dieser Informationen sind weitere Analysewerkzeuge notwendig, wie z.B. Programme zum Trennen von Text- und Bildinhalten, die sich in der jdf-Datei befinden. Diese Werkzeuge sind in das Qualitätsanalyseprogramm integriert, bzw. werden von diesem im Bedarfsfall eingesetzt. Das Analyseprogramm arbeitet vollständig automatisiert und folgt dabei einem definierten Ablaufplan, welcher die zu betrachtenden Parameter 12 und deren Wertebereiche beinhaltet. Es erstellt eine Ausgabe in Form eines detaillierten Protokolls 6 mit den Ergebnissen der Prüfung der Einzelparameter und eine Beurteilung des Gesamtergebnisses in Form einer Ampel (Rot - Ergebnisse außerhalb des Wertebereichs, Gelb - Ergebnisse an der Grenze des Wertebereichs, Grün - Ergebnisse innerhalb des Wertebereichs)
Als letzter Schritt folgt optional ein Vergleich der Ergebnisse mit einem idealen Protokoll, welches die Ergebnisse der Verarbeitung der digitalen Testform 1 durch ein optimal arbeitendes Workflowsystems 10 beinhaltet. Damit wird dem Anwender 7 zum einfacheren Bewertung der Ergebnisse der volle Funktionsumfang gezeigt, welcher unter optimalen Bedingungen erreicht werden kann.

### Bezugszeichenliste

- 1.: digitale Testform
- 2.: Druckauftragsdaten
- 3.: Ausgabedaten (jdf)
- 4.: Testergebnisse - Bildinhalte
- 5.: Testergebnisse - Bildgeometrie und Bildqualität
- 6.: Testprotokoll
- 7.: Benutzer
- 8.: Druckmaschine
- 9.: Rechner
- 10: Workflowsystem
- 11: Druckauftragsdauer
- 12: Prüfparameter

## Patentansprüche

1. Verfahren zur automatisierten Qualifizierung eines Workflowsystems (10) zur Verarbeitung eines Druckauftrages (2) durch einen Rechner (9), welcher mittels einer Datenverbindung mit dem Rechner des Workflowsystems (10) verbunden ist, die folgenden Schritte umfassend:
• Anlegen und Durchlaufen eines Druckauftrages (2) im Workflowsystem (10) unter Verwendung einer definierten digitalen Testform (1)
• Speichern der Ausgabedaten (3) des Workflowsystems (10), insbesondere von ppf- und jdf-Dateien,
• Überprüfung der Ausgabedaten (3) hinsichtlich der Bildinhalte (4)
• Überprüfung der Ausgabedaten (3) hinsichtlich der Bildgeometrie und Bildqualität (5)
• Anfertigen eines Testprotokolls (6) mit Bewertung der einzelnen geprüften Parameter (12) sowie der Gesamtperformance des getesteten Workflowsystems (10)

2. Verfahren nach Anspruch 1,
**dadurch gekennzeichnet,**
**dass** die digitale Testform (1) zu testende Bildinhalte (4), wie kleine Strukturen, homogene Flächen, CMYK-Bilder, einen Nutzen, definierte Kombinationen von Skalen- und Sonderfarben, sowie definierte Messelemente enthält.

3. Verfahren nach einem der vorhergehenden Ansprüche,
**dadurch gekennzeichnet,**
**dass** die zu überprüfenden Bildinhalte (4) der Ausgabedaten (3) insbesondere die Auflösung des Bildes, die Qualität der Homogenität und die Plausibilität der Bildinhalte (4) umfassen.

4. Verfahren nach einem der vorhergehenden Ansprüche,
**dadurch gekennzeichnet,**
**dass** die zu überprüfende Bildgeometrie und Bildqualität (5) der Ausgabedaten (3), insbesondere die Größe des Sujets, die Position des Sujets auf dem Bedruckstoff, die Farbdaten und Separationen, sowie Typ und Größe des Bedruckstoffes, umfassen.

5. Verfahren nach einem der vorhergehenden Ansprüche,
**dadurch gekennzeichnet,**
**dass** die Bewertung der Gesamtperformance des zu testenden Workflowsystems (10) in Form einer Ampelbewertung geschieht.

6. Verfahren nach einem der vorhergehenden Ansprüche,
**dadurch gekennzeichnet,**
**dass** zur Einordnung der Testergebnisse das resultierende Testprotokoll (6) mit einem vorgefertigten Testprotokoll mit idealen Sollwerten abgeglichen wird.
